# EUROPEAN PATENT APPLICATION

(11) **EP 0 889 110 A1**
(43) Date of publication of application: **07.01.1999**
(21) Application number: 98305360.4
(22) Date of filing: 06.07.1998
(51) Int. Cl.: C09K 21/02, C09D 5/18, D06M 11/82

(54) **Non-inflammable matter**

(30) Priority: 05.07.1997 IR
(71) Applicant: Shafahie, Manoucheher, Ekhtyarieh, Tehran (IR)
(72) Inventor: Hasanabadi, Kazem Mousari, Pasdaran, Tehran (IR); Shafahie, Manoucheher, Shahid Tasslimi Av., Ekhtyarieh, Tehran (IR)
(74) Representative: Lloyd, Patrick Alexander Desmond

(57) **Abstract**

The invention relates to a composition which comprises uric acid and borax and optionally at least one of ammonium nitrate, tetrachloride, or fluoride. Compositions according to the invention can be used to reduce the flammability of a substance.

## Description

The present invention relates to compositions for reducing the inflammability of a substance and to methods for treating the substance to reduce its inflammability.

Inflammable substances are hazardous because they are prone to catch fire. Consequently it has been desired to provide an effective way of making these inflammable substances less hazardous.

According to the invention there is provided a composition for reducing the inflammability of a substance, the composition comprising uric acid and burax. The composition may further comprise at least one of ammonium nitrate, tetrachloride, or fluoride.

The composition may further comprise water. The components of compositions according to the invention may be in aqueous solution.

According to the invention there is also provided a method for reducing the inflammability of a substance which comprises admixing a composition according to the invention with the substance. The admixture can take place in the presence of water and/or the components can be mixed with water before they are admixed with the substance whose inflammability is to be reduced.

In one embodiment, the composition comprises uric acid and borax.

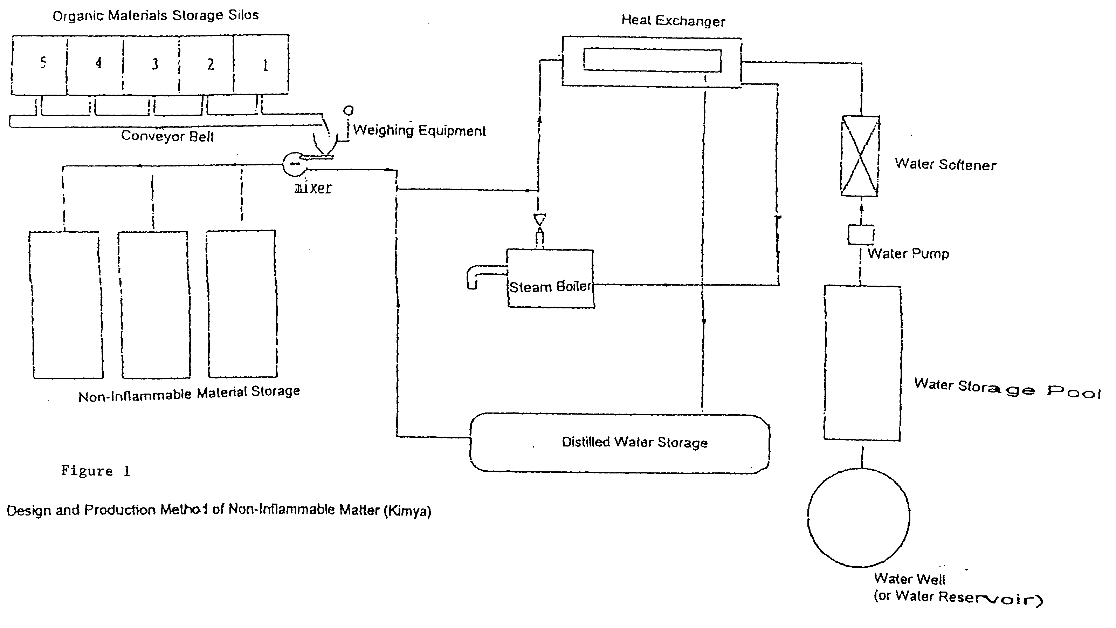

Embodiments of the invention will be described in detail, by way of example, with reference to the accompanying drawing in which figure 1 shows schematically a system for producing non-inflammable matter.

In the following discussion, A represents uric acid, B represents burax, N represents ammonium nitrate, F represents fluoride, and T represents tetrachloride.

Fire and its discovery was a God-given-gift and played an enormous role in the progress and evolution of the human communities. Nevertheless, despite its vital role, the flame of fire has caused considerable personal injury, financial loss and environment damage to human communities each year. Therefore, in order to stop this calamity, we, Manoucheher Shafahie and Seyed Kazem Mousavi have, by many years of research and test, invented and made a liquid preventing inflammation of inflammable mater which has the following special specifications and advantages:
**1. The Advantages of the Invented Matter**
   1.1 Its comprising raw materials have been selected such that are no danger to the environment.
   1.2 Smoke and gases ascending therefrom are not poisonous and do not cause pollution and poisoning.
   1.3 The products soaked in this matter do not suffer from premature decay or quality weakness.
   1.4 Does not cause any skin or internal decease in humans (even in case of drinking of this liquid, it will not cause any poisoning, allergy or have any other bad effect.
   1.5 Another advantage of this liquid is that its comprising raw materials are easily accessible, the production system is simple and the production rate is high.
   1.6 This liquid, with minor modification in its formula, is capable of making different industrial products (wood, paper, textile, etc) non-inflammable (see item 3 for details).
   1.7 Being capable of high production, it will not have any adverse effect on the production quantity of plants.
   1.8 it will not leave any visible mark on products which have become non-inflammable.
   1.9 Other than soaking, it is also possible to make the liquid in the form of a spray which will have a temporary non-inflammable effect and could be rubbed off or washed.
   1.10 The quality of the product soaked [in the liquid] will remain unaltered and will not be adversely affected.
   1.11 One of the obvious advantages of the invented matter is that it can be used in different industries and that its effect is permanent.

   - Note:: In textiles the non-inflammable effect will be destroyed by complete washing.
**2- Raw Materials and Method of Production**
   **2.1 Raw Materials**
   2.2.2 Distilled water
      2.1.1.1 Supply of water from any source (water well, river or other sources)
      2.1.1.2 Desalination using water softener
      2.1.1.3 The system of evaporation and distilling to obtain distilled water
      2.1.1.4 Storing of distilled water
      2.1.1.5 Weighing of distilled water in mixer
   2.1.2 Organic Materials
      2.1.2.1 Comprises of five organic materials abbreviated as "ABNFT" and the amount of each of these materials varies for use in different industries. Examples are :
      2.1.2.2 -----shown as "A" and the percentage of its use for different industries varies from 2 to 5 percent
      2.1.2.3 ----- shown as 8" and the percentage of its use for different industries varies from 3 to 6 percent.
      2.1.2.4 ----- shown as "N" and the percentage of its use for different industries varies from 1 to 2 percent.
      2.1.2.5 ----- shown as "F" and the percentage of its use for different industries varies from 0.2 to 0.5 percent.
      2.1.2.6 ----- shown as "T" and the percentage of its use for different industries varies from 0.3 to 0.7 percent.
**2.2 Method of Production**
   2.2.1 Firstly compounds selected from the five samples should be supplied and stored in separate silos.
   2.2.2 The necessary amount of raw materials is transported to the mixer by a conveyor belt, in the proper order and at the pre-fixed time and quantity.
   2.2.3 Each of the materials is, as required, weighed and enters the mixer at the predetermined time.
   2.2.4 Depending on the raw material entering the mixer and as required, the temperature of the distilled water in the mixer varies between 50 to 90 degrees.
   2.2.5 The organic materials are, in turns, mixed with the distilled water.
   2.2.6 The non-inflammable matter is prepared and comes out of the mixer and Is stored in storages which can be in the form of concrete closed pools or barrels made of stainless steel.
**3- Use of the Non-Inflammable Matter In Different Industries**
   **3.1 Wood Industry**
      In all wood industries with the special formula "AB" where "A" is 6%; "B" is 3.5% and the rest is penetrable distilled water and the method of making each of the byproducts of wood is as follows:
      3.1.1 Wood Veneering Industry
         At the time when the tree trunks are put in water (for wetting purposes) in order to prepare them for cutting, the non-inflammable liquid may be used instead of water which will penetrate all layers of the wood and, naturally, the veneer prepared will be non-inflammable.
      3.1.2 Neopan Industry
         In this industry the following two methods can be used to make the material non-inflammable;
         3.1.2.1 At the time of making of the glue and then at the time of mixing of the wood and glue before pressing,
         3.1.2.2 Before putting in furnace the wood should be soaked with the liquid (wood filings will become non-inflammable).
      3.1.3 The Fibre Industry
         In this industry the non-inflammable matter should be mixed with the fibre mix at the time of its preparation and after the drying and pressing process are completed, the fibre will become non-inflammable.
      3.1.4 Multi-layer Industry
         First the lumber will be made non-inflammable by soaking [in the non-inflammable liquid] and then the necessary cuts will be made and different layers which have become non-inflammable will be glued and pressed.
      3.1.5 Lumber and Panel Industry
      Generally, wood becomes non-inflammable by being soaked in the non-inflammable liquid before cutting whereafter different types of panels, parquets, etc can be made.
   **3.2 Textile Industry**
      3.2.1 Different types of soft and delicate textiles (such as textile used for furniture cover, curtain, normal fabric) can be made non-inflammable at the final stage of production and before drying by being soaked in the non-inflammable liquid.
         3.2.1.1 The formula to be used in this industry is "ABNT" where "A" is 3%, "B" is 4.5%, "N" is 1 % , "T" is 3% and the rest is distilled water.
      3.2.2 Different types of rough textile (such as tarpaulin and sackcloth)
         3.2.2.1 The formula to be used here is "BAN" where "B" is 4.5%; "A" is 2.5%; "N" is 2% and the rest is distilled water. Different types of rough textile (such as tarpaulin and sackcloth can be made non-inflammable before the drying process and by being soaked in the non-inflammable liquid.
   **3.3 Paper Industry**
      3.3.1 Regular paper, cardboard and other similar products can be made non-inflammable by being soaked in the non-inflammable liquid after dehyderation and before the drying process.
      3.3.2 The special formula to be used in this industry is "ABNFT" where "A" is 3%; "B" is 4.5%; "N" is 1.5%; "F" is 4%; "T" is 0.35% and the rest is distilled water.
   **3.4 Electronics Industry**
      3.4.1 Printed circuit boards: In this product which is made of textile and a type of resin, it is possible to either make the textile non-inflammable at the beginning of the process or purchase non-inflammable textile and then proceed with the other technical stages of production.
         3.4.1.1 The special formula to be used in this industry is "BANT" where "B" is 4.5%; "A" is 3%; "N" is 1.2%; "T" is 3% and the rest is distilled water.
      3.4.2 Electrical isolaters, which are also called bone fibres, are made of paper and a type of resin and it is possible to make them non-inflammable by soaking the paper in the non-inflammable liquid (or buying non-inflammable paper) at the beginning of production and then proceed with another technical stages of production.
         3.4.2.1 The special formula to be used in this industry is "ABNAFT" where "A" is 3.5%; "B" is 4%; "N" is 1.5%; "F" is 4%; "T" is 6% and the rest is distilled water.
      3.4.3 Non-inflammable treads: Regular or special treads, with any thickens or shape, can be made non-inflammable by being soaked in the non-inflammable liquid and one of their uses is in power cables.
         3.4.3.1 The special formula to be used in this industry is "BAN" where "B" is 4.5%; "A" is 3%; "N" is 1.5% and the rest is distilled water.
   **3.5 Paint Industry**
      3.5.1 Plastic paint: The non-inflammable liquid is mixed with the raw material at the time of making the paint and makes it non-inflammable.
         3.5.1.1 The special formula to be used in this industry is "ABN" where "A" is 3%; "B" is 4%; "N" is 2.5% and the rest is distilled water.
      Note: Other types of paint are being researched and tested.

Obviously, this material is a new invention in the world and no non-inflammable matter with these specifications (as described above) exists in the world.
Accordingly, we proudly declare that we have saved the human race from one of the calamities and are continuing our research for making polymer and petroleum substances non-inflammable and have reached positive results also in this respect which will be announced later.

### Respectfully,

### Manoucheher Shafahie Kazem Mousavi Hasanabadi

### Description

### Description of Non-Inflammable Matter (Kimya)

We, Manoucheher Shafahie and Kazem Mousavi Hasanabadi, hereby confirm and claim that this invention makes it easily possible for different types of inflammable material to become non-inflammable (such as wood, paper, textile, etc) and we claim that no formula similar to this one, with the same production rate and specifications, does not exist in any other place in the world.
1- Does not leave any visible mark on the material soaked in it
2- Does not pollute the environment
3- Does not cause skin irritation or internal diseases in humans
4- Gases ascending from it are not poisonous
5- It can be drank
6- It does not affect the quality of the material, such as decay
7- It does not reduce the [useful] life of the materials soaked in it.
8- Its effect is permanent in most products such as wood and paper and it is possible to make its effect permanent also in textile.
9- It is possible to use it also as a spray (its effect is temporary)
10- Raw materials of which it is comprised are easily obtainable in or outside the country
11 - The affordable price of the produced material is one of its advantages
12- This invention can be used in different industries such as wood (fibre, neopan, multi-layer, veneer, etc), cellulose (paper, cardboard, etc), textile (fabric, tarpaulin, sackcloth), printed circuit board and electrical isolaters.
13- The materials become non-inflammable by being soaked in the non-inflammable liquid.

Considering the uniqueness of the non-inflammable mater (Kimya), the possibility of it being used in other industries, such as polymer and petroleum, is not inaccessible and, God willing, you will be advised in future of the completing of the invention.

### Manoucheher Shafahie Kazem Mousavi Hasanabadi

**Design of the Invention of Non-Inflammable Matter (Kimya)**
**A) Supply of Water**
   1 - Supply and storage of water (from well or any other source)
   2- Desalination of water using by water softener
   3- Distillation of water and obtaining of desalinated water
   4- Storage of distilled water
**B) Supply of Material**
   1- Storage of up to five samples of needed material (in graduated silos)
   2- Separate weighing of each of the materials
   3- Conveyor belt for transferring of the materials to the mixer
**C) Method of Productlon In Mixer**
   1- Entry of water of approximately 50 degrees
   2- Entry of materials ((1) weighing of materials; (2) gradually one after the other; after one material has acted and has been dissolved in water the other enters)
   3- Exit of material from mixer
   4- Storage of Kimya non-inflammable matter

- Note 1-: The water quantity is 80%
- Note 2-: Mixing of the organic material with maximum percentages of 9, 7, 0.5, 1.5 and 2.5 respectively at specific times for a total of two hours.
- Note 3-: For the purpose of soaking and use different industries it is essential that it is added at specific times. For example in case of tarpaulin before the drying process and after painting or in case of fibre at the time of preparation of the mix or in case of printed circuit boards [and] in paper or textile at the beginning [of the production process].

## Claims

1. A composition for reducing the inflammability of a substance, the composition comprising uric acid and burax.

2. A composition according to claim 1 which further comprises at least one of ammonium nitrate, tetrachloride, or fluoride.

3. A composition according to claim 1 or 2 which further comprises water.

4. A composition according to any preceding claim in which the uric acid is present at about 2% to about 5% by weight of the composition.

5. A composition according to any preceding claim in which the burax is present at about 3% to about 6% by weight of the composition.

6. A composition according to any of claims 2 to 5 in which the ammonium nitrate is present at about 1% to about 2% by weight of the composition.

7. A composition according to any of claims 2 to 6 in which the fluoride is present at about 0.2% to about 0.5% by weight of the composition.

8. A composition according to any of claims 2 to 7 in which the tetrachloride is present at about 0.3% to about 0.7% by weight of the composition.

9. A method for reducing the inflammability of a substance the method comprising admixing a composition according to any of claims 1 to 8 with the substance.

10. Use of a composition according to any of claims 1 to 8 for reducing the inflammability of a substance.
